Europäisches Patentamt

European Patent Office

Office européen des brevets

(11) Publication number: **0 257 980 B1**

## EUROPEAN PATENT SPECIFICATION

(45) Date of publication of patent specification: **04.03.92**

(51) Int. Cl.[5]: **B22F 7/08**, C23C 24/10, B22F 3/26

(21) Application number: **87307354.8**

(22) Date of filing: **20.08.87**

(54) **A method of forming a wear-resistant layer.**

(30) Priority: **21.08.86 JP 196362/86 U**

(43) Date of publication of application:
**02.03.88 Bulletin 88/09**

(45) Publication of the grant of the patent:
**04.03.92 Bulletin 92/10**

(84) Designated Contracting States:
**CH DE GB LI**

(56) References cited:
**EP-A- 0 007 664      EP-A- 0 023 733**
**BE-A- 902 204        DE-A- 3 339 213**
**FR-A- 1 259 467      JP-B- 4 927 500**
**US-A- 4 017 480**

(73) Proprietor: **TOSHIBA KIKAI KABUSHIKI KAISHA**
**11-2, Ginza 4-chome Chuo-ku**
**Tokyo 104(JP)**

(72) Inventor: **Miyauchi, Mikiyoshi**
**O-Oka 1805-2 (N-16-103)**
**Numazu-shi, Shizuokaken(JP)**
Inventor: **Meguro, Takashi**
**Shimokanuki Ookubo 2359-8**
**Numazu-shi, Shizuoka-Ken(JP)**
Inventor: **Serizawa, Hisao**
**Chabatake 223-1**
**Susono-shi, Shizuoka-Ken(JP)**
Inventor: **Kusanagi, Hiroaki**
**Hongo-cho 23-29**
**Numazu-shi, Shizuoka-Ken(JP)**

(74) Representative: **Calderbank, Thomas Roger et al**
**MEWBURN ELLIS & CO. 2/3 Cursitor Street**
**London EC4A 1BO(GB)**

## Description

This invention relates to the forming of a wear-resistant layer, on a surface for example of a metallic material. Such a layer may be particularly useful, for example on a machine part which is liable to wear, for instance on a machine used for forming plastics materials.

Formation of wear-resistant materials on machine parts has previously been carried out by spray-coating, or sintering, after laminating alternately layers of wear-resistant powder (of metal) and slurry (of ceramic). It has been found, however, that layers formed by spray-coating often become detached from the base material. This is because the thickness of the layer is normally approximately 0.2mm, and this is too thin for the layer to withstand "Herz Stress", and satisfactory adhesion to the base material is thus difficult to obtain. Sintering suffers from the disadvantage that, after laminating alternately layers of wear-resistant metal powder and ceramic slurry, difficulties arise in forming a uniform layer. This is because the metal powder permeates into the ceramic slurry after sintering. Another disadvantage with this method is that a sintered workpiece requires a long machining time due to the roughness of the surface of the workpiece, which is caused by the organic binder reacting or melting at the boundary areas between the ceramic slurry, and the wear-resistant metal powder.

US-A-4,017,480 discloses a process of forming a wear resistant layer comprising a high density of hard particles such as tungsten carbide bonded together in a softer matrix of a nickel alloy. The hard particle powder is filled with a brazing cement (a plastic binder in a volatile base) once it has been applied to a steel surface.

The present invention therefore proposes the formation of a wear-resistant layer according to claim 1.

Powders made of materials selected from carbides and borides, of metals belonging to groups IV and VI of the periodic table, are coated on the surface of the base material with organic binder to form a covering layer. The covering layer is then pressure moulded and/or machined and the organic binder in the covering layer is heated and eliminated. A metallic binder which serves as a matrix in the covering layer, is dissolved so as to permeate into the covering layer (this is done in a vacuum furnace), resulting in the combining or the joining of the metal binder with the base material.

Embodiments of the present invention will now be described in detail with reference to the accompanying drawings in which:

Fig. 1 is a longitudinal-sectional view of tungsten (WC) slurry coated on the surface of a worm gear;

Fig. 2 is a photomicrograph showing a section of a worm gear with a wear-resistant layer according to the present invention (magnification : 50) after sintering;

Fig. 3 is a graph showing the results of an abrasion test on a wear-resistant layer according to the invention.

Embodiment 1

In this first embodiment a slurry mixture, is formed by mixing the tungsten WC powder (which has a particle size preferably less than 50 microns), organic binder (which is referably an acrylic resin, but water may also be used) and an organic solvent (e.g. methylethylketone) in the ratio of 100:1:14 respectively.

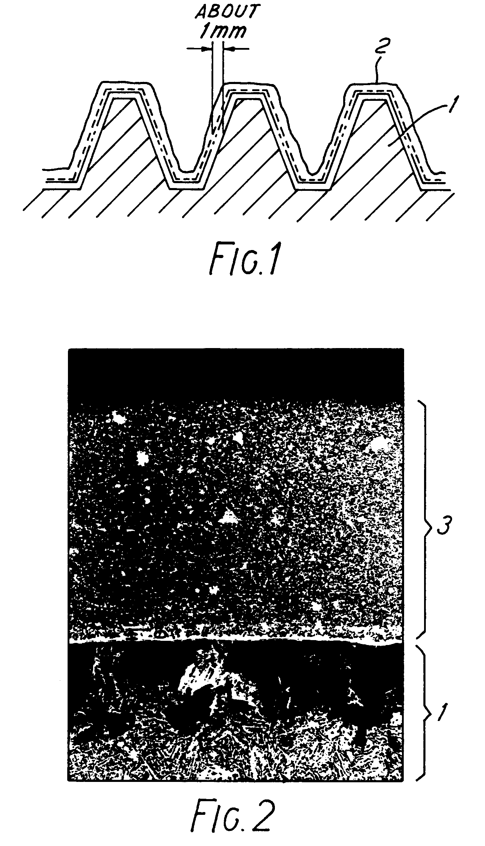

A part 1 of a worm gear shown in Fig. 1, forming a base material which is to receive the wear-resistant layer, is machined so as to reduce its size, in order to compensate for the eventual increase in size due to the application of the wear-resistant coating. The material of the worm gear may be e.g. that known as SCM 435.

The slurry mixture is coated onto the surface of the worm gear 1 with a spraying device to create a covering layer 2, and the resulting covering layer 2, formed on the surface of the worm gear, is machined by a lathe to a thickness of approximately 1mm (as illustrated in Fig. 1).

Fine particles of a nickel-based self-melting alloy (the preferred composition of which is shown in Table 1; a cobalt-based self-melting alloy may also be used) which are capable of being used as a matrix, are placed in a melting pot. The worm gear is also placed vertically in the melting pot. The melting pot and contents are then heated in a vacuum furnace (at a degree of vacuum of $1 \times 10^{-2} \sim 1 \times 10^{-1}$ Torr, 0.13 to 1,3 Pa), from 0 to 400°C at a rate of temperature rise of 30°C per hour, from 400 to 1100°C at a rate of temperature rise of 5°C per minute, and at 1100°C for 30 minutes.

2

Table 1

| (% by weight) | | | | | |
| --- | --- | --- | --- | --- | --- |
| Ni | B | Si | Fe | C | Others |
| Balance | 2.52 | 4.70 | 1.5 | 0.15 | 0.5 |

The heating results in the fine particles of the nickel-based self-melting alloy becoming fused and permeated into the mixture of slurry, and the materials of the worm gear and coating are then cooled to room temperature in the same vacuum furnace. Initially the tungsten (WC) powder adheres to the surface of the worm gear due to the acrylic resin, but when the resin is evaporated and/or fused in during heating, the tungsten (WC) powder depends on a certain amount of self-adhesion in order to adhere to the surface of the worm gear.

Thus, in sintering, a wear-resistant material is formed, and is combined with the base material by permeating the nickel-based self-melting alloy into the covering layer;

Fig. 2 is a microscopic photograph, showing a section through the surface of a worm gear 1, with the covering layer 3 thus formed.

Embodiment 2

In a second embodiment of the present invention, the slurry is formed by the mixing of $Mo_2B_5$ powder (also preferably having a particle size of less than 50 microns). The ratio of quantities in the slurry mixture is the same as in the first embodiment. The mixture of slurry is coated onto the surface of the worm gear (which rotates at e.g. 5 rpm) by a spraying device (as may also occur in the first embodiment).

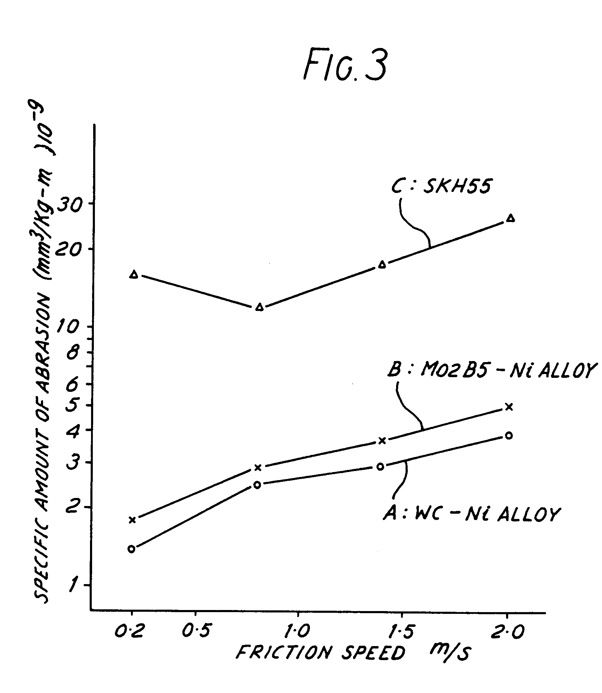

It has been found, that the hardness of the covering layer is of the order of Hv800 1000, and the hardness of the base material is HRc10. Fig. 3 shows the specific amount of abrasion in wear-resistant layers of the type described in the present application. As can be seen in Fig. 3, the performance of wear-resistant layers prepared according to the present invention, is superior to those previously available (high speed steel SHK55, hardness HRc62) in terms of its wear-resisting properties. This data was obtained using a Dogoshi-type abrader, and the testing member of the abrasion test has the following properties: SKD11 (metal steel based on Japanese industrial standard) HRc58 (symbols showing the Rockwell hardness). The abrasion distance was 600m, the pressing load 18.9Kgf (189N), and the specific amount of abrasion is that amount of abrasion produced, at an abrasion distance of 1m and a pressing load of 1Kgf (10N).

In this example of the present invention, when the slurry mixture is coated on the surface of the wear-resistant material, bubbles and irregular densities are sometimes found. However, when a CIP treatment is used for the slurry mixture, this is not the case. When the tungsten (WC) mould thickness required is 3mm, bubbles are not found if the pressure in the furnace is about 1000Kg/cm$^2$ (1 x 10$^8$ Pa) (when a CIP treatment is used).

The present invention, enables the formation of a thin layer of wear-resistant material, without the presence of defects. Further, excessive machine-work is not required after sintering, and thus a wear-resistant layer may be formed at comparatively low cost.

**Claims**

1.  A method of forming a wear-resistant layer on a base material, comprising the steps of:

    mixing organic binder with powder of carbides and/or borides of metals belonging to groups IV and/or VI of the periodic table;

    coating the mixed organic binder and powder onto the base material to form a covering layer on the base material;

    machining the covering layer;

    heating the covering layer in a sintering furnace containing metal binder, to eliminate the organic binder from the covering layer, permeate the metal binder into the covering layer and hence join the metal binder and the base material.

2.  A method according to claim 1, wherein the metal binder is a nickel-based self-melting alloy or a cobalt-based self-melting alloy.

**3.** A method according to claim 1 or claim 2, wherein the organic binder is water or a volatile organic solvent of natural or synthetic high polymer.

**4.** A method according to any one of the preceding claims, wherein the covering layer is moulded under compression prior to the machining of that layer.

**Revendications**

**1.** Procédé de formation d'une couche résistante à l'usure sur un matériau de base, comprenant les étapes de :

mélanger un liant organique à la poudre de carbures et/ou borures de métaux appartenant aux groupes IV et/ou VI de la table périodique ;

appliquer le liant organique et la poudre mélangés sur le matériau de base pour former une couche de recouvrement sur le matériau de base ;

usiner la couche de recouvrement ;

chauffer la couche de recouvrement dans un four de frittage contenant un liant métallique pour éliminer le liant organique de la couche de recouvrement, faire traverser le liant métallique dans la couche de recouvrement et par conséquent joindre le liant métallique et le matériau de base.

**2.** Procédé selon la revendication 1, où le liant métallique est un alliage autofondant à base de nickel ou un alliage autofondant à base de cobalt.

**3.** Procédé selon la revendication 1 ou la revendication 2, où le liant organique est de l'eau ou un solvant organique volatil d'un polymère supérieur naturel ou synthétique.

**4.** Procédé selon l'une quelconque des revendications précédentes, où la couche de recouvrement est moulée sous compression avant usinage de cette couche.

**Patentansprüche**

**1.** Verfahren zur Bildung einer verschleißbeständigen Schicht auf einem Basismaterial, die folgenden Schritte umfassend:

Mischen von organischem Bindemittel mit Pulver aus Karbiden und/oder Boriden von Metallen, die zu den Gruppen IV und/oder VI des Periodensystems gehören;

Auftragen des gemischten organischen Bindemittels und Pulvers auf das Basismaterial, um eine Deckschicht auf dem Basismaterial zu bilden;

maschinelles Bearbeiten der Deckschicht;

Erwärmen der Deckschicht in einem Sinterofen, der Metallbindemittel enthält, um das organische Bindemittel von der Deckschicht zu eliminieren, das Metallbindemittel in die Deckschicht eindringen zu lassen und somit das Metallbindemittel und das Basismaterial zu verbinden.

**2.** Verfahren nach Anspruch 1, worin das Metallbindemittel eine selbstschmelzende Legierung auf Nickelbasis oder eine selbstschmelzende Legierung auf Kobaltbasis ist.

**3.** Verfahren nach Anspruch 1 oder 2, worin das organische Bindemittel Wasser oder ein flüchtiges organisches Lösungsmittel eines natürlichen oder synthetischen Hoch-Polymers ist.

**4.** Verfahren nach einem der vorhergehenden Ansprüche, worin die Deckschicht vor dem maschinellen Bearbeiten dieser Schicht unter Druck geformt wird.

ABOUT
1mm

*FIG.1*

*FIG.2*

FIG.3